# EUROPEAN PATENT APPLICATION

(11) **EP 4 831 589 A1**
(43) Date of publication of application: **28.10.2026**
(21) Application number: 26168587.9
(22) Date of filing: 27.03.2026
(51) Int. Cl.: G01C 25/00, G01C 19/5776

(54) **USING A TEST TONE TO CALIBRATE A SCALE FACTOR FOR A MICROELECTROMECHANICAL SYSTEM (MEMS) GYROSCOPE**

(30) Priority: 21.04.2025 US 202519185092
(71) Applicant: Honeywell International Inc., Charlotte, NC 28202 (US)
(72) Inventor: BROWN, Andrew Roberts, Charlotte, 28202 (US); GNERLICH, Markus Hans, Charlotte, 28202 (US); GUND, Ved, Charlotte, 28202 (US); REINKE, John, Charlotte, 28202 (US)
(74) Representative: Haseltine Lake Kempner LLP

(57) **Abstract**

A system is provided. The system includes: a microelectromechanical system (MEMS) gyroscope including an oscillating proof mass; readout electronics, coupled to the MEMS gyroscope, the readout electronics including: a first electrical channel that is configured to monitor an amplitude of oscillation of the proof mass at a first frequency and to produce a drive output; a second electrical channel that is configured to monitor an amplitude of a response of the proof mass to an input rate that represents a deflection of the proof mass, and to produce a rate output; and a processing system, including: a signal generator that is configured to generate a test tone at a second frequency, different from the first frequency and out of band from a bandwidth of the MEMS gyroscope, and to inject the test tone into the first electrical channel and the second electrical channel; and a scale factor adjustment function that is configured to adjust a scale factor for the MEMS gyroscope by a ratio of the drive output at the second frequency to the rate output at the second frequency.

## Description

### BACKGROUND

A vibrating structure gyroscope (VSG), or Coriolis vibratory gyroscope (CVG), uses a vibrating (as opposed to rotating) structure as its orientation reference. The underlying physical principle is that a vibrating object tends to continue vibrating in the same plane even if its support rotates. The Coriolis effect exerts an orthogonal force on this object, and by measuring this force the rate of rotation can be determined.

Vibrating structure gyroscopes are simpler and cheaper than conventional rotating gyroscopes of similar accuracy. Inexpensive vibrating structure gyroscopes manufactured with microelectromechanical systems (MEMS) technology are widely used in smartphones, gaming devices, cameras and many other applications.

The nominal scale factor of a MEMS gyroscope describes the basic transfer function of the gyroscope. It is the measure of the gradient of the best straight line that can be fitted by the method of least squares to the expected output signal of the gyroscope, against input inertial signal over the full dynamic range at room temperature. Scale factor stability means the variation of scale factor with temperature and its repeatability, which is typically given in the unit of partsper-million (ppm). The scale factor temperature coefficient (ppm/°C) is the maximum deviation of the scale factor under variable external temperature conditions.

Scale factor drift caused by changes in electrical gain of the readout electronics in a MEMS gyroscope is a problem that limits the performance of MEMS gyroscopes and prevents them from replacing more expensive technologies (like RLGs and FOGs) in high end applications.

Therefore, there is a need in the art for a MEMS gyroscope with reduced scale factor drift.

### SUMMARY

A system is provided. The system includes: a microelectromechanical system (MEMS) gyroscope including an oscillating proof mass; readout electronics, coupled to the MEMS gyroscope, the readout electronics including: a first electrical channel that is configured to monitor an amplitude of oscillation of the proof mass at a first frequency and to produce a drive output; a second electrical channel that is configured to monitor an amplitude of a response of the proof mass to an input rate that represents a deflection of the proof mass, and to produce a rate output; and a processing system, including: a signal generator that is configured to generate a test tone at a second frequency, different from the first frequency and out of band from a bandwidth of the MEMS gyroscope, and to inject the test tone into the first electrical channel and the second electrical channel; and a scale factor adjustment function that is configured to adjust a scale factor for the MEMS gyroscope by a ratio of the drive output at the second frequency to the rate output at the second frequency

### BRIEF DESCRIPTION OF THE DRAWINGS

Embodiments of the present invention can be more easily understood and further advantages and uses thereof more readily apparent, when considered in view of the description of the embodiments and the following figures in which:
FIG. 1 is a schematic diagram of one embodiment of a microelectromechanical system (MEMS) gyroscope with readout electronics having scale factor calibration using a test tone.
FIGs. 2A and 2B are schematic diagrams of two embodiments of an interface circuit for injecting test tones into first and second electrical paths of a MEMS gyroscope.
FIG. 3 is a flow chart of one embodiment of a process for using a test tone to calibrate a scale factor for a MEMS gyroscope.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

Conventionally, a MEMS gyroscope uses at least two electrical channels to read out or pick-off signals from a vibrating proof mass of the gyroscope. One electrical channel is used to measure the amplitude of the driven motion of the proof mass of the gyroscope. This measurement is used at least in an amplitude gain control loop to keep the proof mass vibrating at a controlled displacement. The other electrical channel is used to measure the amplitude of the response of the proof mass of the gyroscope to input rate (rotation). When multiplied by the scale factor, this signal provides the output of the gyroscope. When the electrical gain of any of the components in these two channels change, the scale factor of the gyroscope changes. Thus, the instability of the two read out channels is a contributing factor to the scale factor drift of MEMS gyroscopes.

Embodiments of the present invention overcome the problem with scale factor drift due to the gain instability of these two channels. Embodiments of the invention use a ratio of the gains of the two channels to adjust the calibration of the scale factor. Embodiments of the present invention calibrate out any drift in the ratio of the gains of the two channels by coupling an electrical test tone at a frequency, different from the frequency of the vibrating proof mass and outside the bandwidth of the MEMS gyroscope, into both electrical channels, e.g., through matched elements such as capacitors, inductors or other appropriate circuit elements. This test tone originates at a signal source and is observed on both electrical channels. The information read out on the two electrical channels at the test tone frequency is used to adjust the calibration of the gyroscope's scale factor. It is noted that the test tone itself does not have to be stable as long as the ratio of its coupling into the two channels, set by the matched element using for coupling, remains stable.

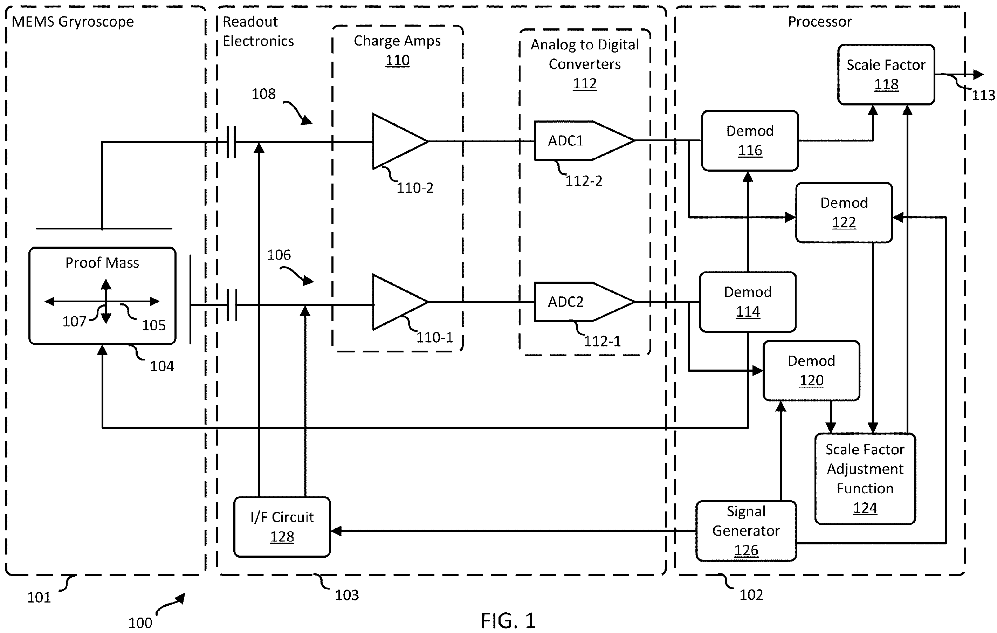

FIG. 1 is a schematic diagram of one embodiment of a system 100 with a microelectromechanical system (MEMS) gyroscope 101, readout electronics 103 and a processor 102 that implements scale factor calibration using a test tone. In this embodiment, gyroscope 101 is MEMS Coriolis vibratory gyroscope (CVG)that includes a proof mass 104. Proof mass 104 is formed, for example, from silicon and vibrates along a line in one direction (so-called drive direction 105). When proof mass 104 experiences rotation due to movement of a vehicle or rotation in space, for example, proof mass 104 deflects in a direction orthogonal to the drive direction 105, referred to as the sense direction 107. Gyroscope 101 picks up this deflection and produces a signal, referred to as the rate output that represents the rotation experienced by the gyroscope.

Gyroscope 101 is coupled to two electrical channels in readout electronics 103 that are used in the operation of gyroscope 101. First electrical channel 106 monitors the motion of proof mass 104 in the drive direction 105. Proof mass 104 is driven in drive direction 105 at its drive frequency (or resonant frequency). One objective of the design of gyroscope 101 is to keep the drive motion of proof mass 104 constant (frequency and amplitude) over the operating temperature range and over the life of gyroscope 101. For example, the amplitude of motion of proof mass 104 may be set at 10, 20, 30 microns or any other appropriate amplitude. The second electrical channel 108 is the sense channel. The second electrical channel 108 measures the input rate by measuring the deflection of proof mass 104 in sense direction 107. The output of second electrical channel 108 is the signal that represents the quantity that gyroscope 101 is designed to measure; the rate of rotation measured by the gyroscope. The stability of first electrical channel 106 and second electrical channel 108 determines the scale factor stability of gyroscope 101.

In operation, first electrical channel 106 and second electrical channel 108 pick off signals from proof mass 104 as small current signals. These small current signals are amplified in charge amplifiers 110 ("charge amps") and digitized in analog-to-digital converters 112 in readout electronics 103. The gain of charge amplifiers 110 and analog-to-digital converters 112 can change over time. This instability can introduce variation in the actual scale factor of gyroscope 101 that is needed to produce an accurate output. This source of error could be reduced by designing better charge amplifiers 110 and analog-to-digital converters 112. But these improved circuit elements are likely to be more expensive, heavier, larger, and consume more power. However, rather than sacrificing size, weight, power and cost, embodiments of the present invention include a way to adjust the scale factor using a ratio of signals that pass through first electrical channel 106 and second electrical channel 108. With this approach, the gain stability of the individual channels is not a factor because the ratio of the signals in the channels provides a mechanism to calibrate the scale factor and thus reduce the scale factor drift.

Processor 102 receives signals from readout electronics 103 and performs four main functions: (1) applies the scale factor to the rate output (from second electrical channel 108) to produce the output 113 of gyroscope 101, (2) uses a ratio of the rate output at a test tone frequency (second electrical channel 108) to the drive output at the test tone frequency (first electrical channel 106) to adjust the scale factor to account for instability in either the first electrical channel 106 or second electrical channel 108, (3) provides a test tone signal to be injected into first electrical channel 106 and second electrical channel 108 to be used to create the ratio that adjusts the scale factor; and (4) provides amplitude gain control for the movement of proof mass 104 in drive direction 105.

Processor 102 produces output 113 for gyroscope 101. Second electrical channel 108 picks off the rate output from proof mass 104 and passes a charge signal through charge amplifiers 110-2 to series coupled analog-to-digital converter 112-2. The output of analog-to-digital converter 112-2 is demodulated at demodulator 116 at the drive frequency and passed to scale factor circuit 118. Scale factor circuit 118 applies the current scale factor to the output of demodulator 116. This is provided as the output of system 100 at output 113. Initially, scale factor circuit 118 uses the scale factor created at initial calibration. However, over time, that scale factor is adjusted by scale factor adjustment function 124 as described in more detail below.

Processor 102 adjusts the scale factor applied by scale factor circuit 118. Processor 102 receives the rate output from second electrical channel 108 and the drive output from first electrical channel 106. In first electrical channel 106, the drive output is picked off from proof mass 104 and passes a charge signal through charge amplifier 110-1 to series coupled analog-to-digital converter 112-1. The output of analog-to-digital converter 112-1 (the drive output) is demodulated at the test tone frequency in demodulator 120 and provided to scale factor adjustment function 124. Additionally, in second electrical channel 108, the rate output is picked off from proof mass 104 and passes a charge signal through charge amplifier 110-2 to analog-to-digital converter 112-2. The output of analog-to-digital converter 112-2 (rate output) is demodulated in demodulator 122 at the test tone frequency and provided to scale factor adjustment function 124. Demodulator 120 and demodulator 122 demodulate their respective inputs (the drive output and the rate output) at a test tone frequency set by signal generator 126 (described below). The test tone frequency is different from the drive frequency and out of band from the bandwidth of gyroscope 101. Scale factor adjustment function 124 creates a ratio of the output of demodulator 120 to the output of demodulator 122. This ratio is the ratio of the drive output to the rate output at the test tone frequency. Scale factor adjustment function 124 then creates an updated (calibrated) scale factor according to equation (1): ${SF}_{NEW} = {SF}_{OLD} * \left({DO}_{tone}/{RO}_{tone}\right)$ (1) wherein SF represents the scale factor, RO represents the rate output at the frequency of the test tone and DO represents the drive output at the frequency of the test tone.

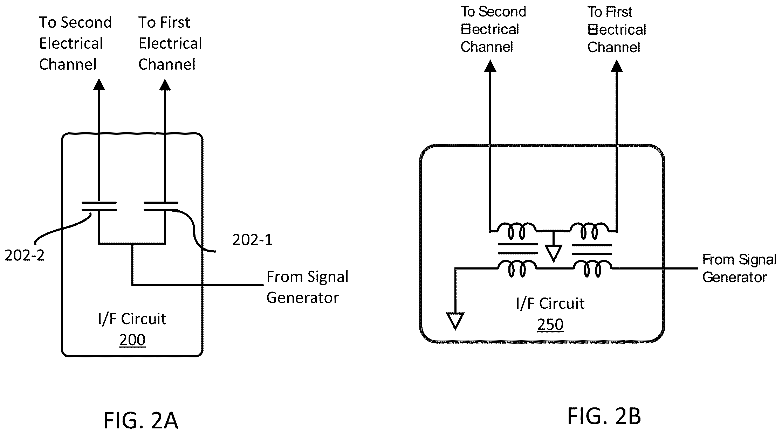

Processor 102 includes signal generator 126 that provides a test tone for use in calibrating the scale factor as described above. Signal generator 126 produces a test tone (at a frequency different from the drive frequency and out of the band of the bandwidth of gyroscope 101) and passes the test tone to interface circuit 128. Interface circuit 128 injects the test tone into both first electrical channel 106 and second electrical channel 108 at the input to charge amplifiers 110. In one embodiment, interface circuit 128 is a matched pair of capacitors or inductors. FIG. 2A illustrates interface circuit 228 which can be used as interface circuit 128 in FIG. 1. Interface circuit 200 includes first capacitor 202-1 and second capacitor 202-2. First capacitor 202-1 and second capacitor 202-2 are coupled to each other and each receives the test tone signal from a signal generator, e.g., signal generator 126 of processor 102 of FIG. 1. The output of first capacitor 202-1 is coupled to the first electrical path of the gyroscope, e.g., first electrical channel 106 of FIG. 1. The output of second capacitor 202-2 is coupled to second electrical path of the gyroscope, e.g., second electrical channel 108 of FIG. 1. In an alternative embodiment, inductive circuit elements are used in interface circuit 250 of FIG. 2B.

When the circuit elements in interface circuit 128 are matched (e.g., matched capacitors in interface circuit 200 of FIG. 2A or matched inductors in interface circuit 250), then the ratio of the drive output to the rate output at the test tone corresponds to the change in the scale factor. If the circuit elements are not matched, but the ratio of the circuit elements remains constant, then the same ratio of the drive output to the rate output at the test tone frequency will also correspond to the change in the scale factor.

In an alternative embodiment, first electrical channel 106 and second electrical channel 108 use a transimpedance amplifier in place of charge amplifiers 110. In that embodiment, interface circuit 128 uses, for example, a matched pair of resistors in place of first capacitor 202-1 and second capacitor 202-2.

Processor 102 provides amplitude gain control for the movement of proof mass 104 in drive direction 105. First electrical channel 106 generates drive output at the output of analog-to-digital converter 112-1. This drive output is demodulated at the frequency of motion of the proof mass 104 (drive frequency). This signal is fed back by demodulator 114 to drive the movement of proof mass 104.

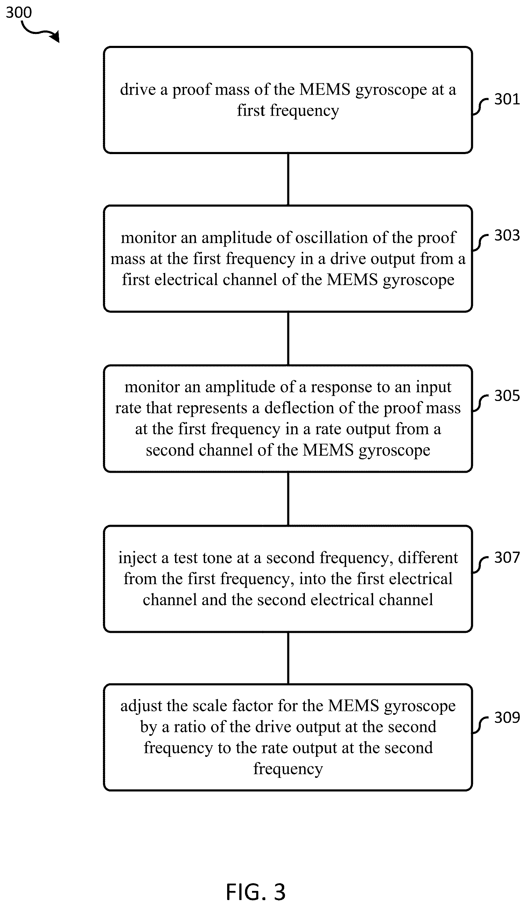

FIG. 3 is a flow chart of one embodiment of a process 300 for using a test tone to calibrate a scale factor for a MEMS gyroscope. For pedagogical purposes, system 100 of FIG. 1 is used in the description of FIG. 3 that follows as one example of how process 300 may be implemented in a system with a MEMS gyroscope. Reference to system 100 of FIG. 1 and its various components is provided by way of example and is not intended as limiting the scope of process 300. At block 301, process 300 drives a proof mass of the MEMS gyroscope at a first frequency. For example, process 300 may drive proof mass 104 in drive direction 105 at a first frequency using an amplitude gain control loop based on a signal demodulated from the first electrical channel 106 (demodulator 114) and fed back to the proof mass 104 of FIG. 1.

At block 303, process 300 monitors an amplitude of oscillation of the proof mass at the first frequency in a drive output from a first electrical channel of the MEMS gyroscope. As described above, gyroscope 101 has a first electrical channel 106 that produces a drive output at the output of analog-to-digital converter 112-1. This drive output is demodulated by demodulator 114 at a first frequency (the frequency of oscillation of the proof mass 104).

At block 305, process 300 monitors an amplitude of a response to an input rate that represents a deflection of the proof mass at the first frequency in a rate output from a second electrical channel of the MEMS gyroscope. As described above, gyroscope 101 has a second electrical channel 108 that produces a rate output at the output of analog-to-digital converter 112-2. This rate output is demodulated at the first frequency by demodulator 116 that is applied to a scale factor circuit 118 to produce the output of gyroscope 101.

At block 307, process 300 injects a test tone at a second frequency, different from the first frequency and out of band from the bandwidth of gyroscope 101, into the first electrical channel and the second electrical channel, e.g., first electrical channel 106 and second electrical channel 108 of FIG. 1. The test tone is generated, e.g., by signal generator 126 of processor 102 of FIG. 1, and has a second frequency that is different from the first frequency.

At block 309, process 300 adjusts the scale factor for the MEMS gyroscope by a ratio of the drive output at the second frequency to the rate output at the second frequency. For example, process 300 demodulates the rate output at the second frequency (such as in demodulator 122 of FIG. 1) and provides the demodulated signal to scale factor adjustment function 124. Further, in this example, process 300 demodulates the drive output at the second frequency (such as in demodulator 120 of FIG. 1) and provides the demodulated signal to scale factor adjustment function 124. Scale factor adjustment function 124 uses the signals from demodulator 120 and demodulator 122 to produce a ratio of the drive output at the second frequency to the rate output at the second frequency. Scale factor adjustment function 124 uses this ratio to calculate a new scale factor, such as using equation (1) described above with respect to FIG. 1. This new scale factor is supplied to scale factor circuit 118.

The methods and techniques described here may be implemented in digital electronic circuitry, or with a programmable processor (for example, a special-purpose processor or a general-purpose processor such as a computer) firmware, software, or in combinations of them. Apparatus embodying these techniques may include appropriate input and output devices, a programmable processor, and a storage medium tangibly embodying program instructions ("a program product") for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random access memory or other non-transitory computer-readable medium. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and DVD disks. Any of the foregoing may be supplemented by, or incorporated in, specially-designed application-specific integrated circuits (ASICs) or Field Programmable Gate Arrays (FGPAs).

### EXAMPLE EMBODIMENTS

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

Example 1 includes a system, comprising: a microelectromechanical system (MEMS) gyroscope including an oscillating proof mass; readout electronics, coupled to the MEMS gyroscope, the readout electronics including: a first electrical channel that is configured to monitor an amplitude of oscillation of the proof mass at a first frequency and to produce a drive output; a second electrical channel that is configured to monitor an amplitude of a response of the proof mass to an input rate that represents a deflection of the proof mass, and to produce a rate output; and a processing system, including: a signal generator that is configured to generate a test tone at a second frequency, different from the first frequency and out of band from a bandwidth of the MEMS gyroscope, and to inject the test tone into the first electrical channel and the second electrical channel; and a scale factor adjustment function that is configured to adjust a scale factor for the MEMS gyroscope by a ratio of the drive output at the second frequency to the rate output at the second frequency.

Example 2 includes the system of example 1, further including an interface circuit that receives the test tone from the signal generator and provides the test tone to the first electrical channel and the second electrical channel.

Example 3 includes the system of example 2, wherein: the first electrical channel includes a first charge amplifier and a first analog-to-digital converter coupled in series; and the second electrical channel includes a second charge amplifier and a second analog-to-digital converter; wherein the signal generator injects the test tone into the interface circuit.

Example 4 includes the system of example 3, wherein the interface circuit includes a first capacitor and a second capacitor, wherein the test tone is provided to the first capacitor and the second capacitor and wherein the first capacitor provides the test tone to the first electrical channel and the second capacitor provides the test tone to the second electrical channel.

Example 5 includes the system of example 4, wherein the first capacitor and the second capacitor comprise a matched pair.

Example 6 includes the system of example 3, wherein the interface circuit includes a matched pair of inductors.

Example 7 includes the system of any of examples 1 through 6, wherein the scale factor adjustment function operates according to: SF_{NEW} = SF_{OLD} * (DO_{tonc}/RO_{tonc}); wherein SF represents the scale factor, RO represents the rate output and DO represents the drive output at the second frequency.

Example 8 includes the system of any of examples 1 to 7, wherein the drive output, at the first frequency, is used to provide amplitude gain control for driving the proof mass.

Example 9 includes the system of any of examples 2, 6, 7 and 8, wherein the first electrical channel includes a first transimpedance amplifier and a first analog-to-digital converter coupled in series; and the second electrical channel includes a second transimpedance amplifier and a second analog-to-digital converter; wherein the signal generator injects the test tone into an input of the first transimpedance amplifier through a first resistor in the interface circuit and injects the test tone into an input of the second transimpedance amplifier through a second, matched resistor in the interface circuit.

Example 10 includes a method for calibrating a scale factor of a microelectromechanical system (MEMS) gyroscope, the method comprising: driving a proof mass of the MEMS gyroscope at a first frequency; monitoring an amplitude of oscillation of the proof mass at the first frequency in a drive output from a first electrical channel of the MEMS gyroscope; monitoring an amplitude of a response to an input rate that represents a deflection of the proof mass at the first frequency in a rate output from a second electrical channel of the MEMS gyroscope; injecting a test tone at a second frequency, different from the first frequency and out of band for a bandwidth of the MEMS gyroscope, into the first electrical channel and the second electrical channel; and adjusting the scale factor for the MEMS gyroscope by a ratio of the drive output at the second frequency to the rate output at the second frequency.

Example 11 includes the method of example 10, wherein driving the proof mass includes demodulating the drive output at the first frequency; and feeding the demodulated drive output back to control the driving the proof mass.

Example 12 includes the method of any of examples 10 and 11, wherein monitoring the amplitude of oscillation of the proof mass includes monitoring the drive output generated by the first electrical channel including a charge amplifier and an analog-to-digital converter.

Example 13 includes the method of any of examples 10 through 12, wherein monitoring the amplitude of the response to the input rate includes monitoring the rate output generated by the second electrical channel including a charge amplifier and an analog-to-digital converter.

Example 14 includes the method of any of examples 10 through 13, wherein injecting the test tone comprises: generating the test tone with a signal generator; and injecting the test tone to the first electrical channel and to the second electrical channel through an interface circuit having a pair of capacitors, a pair of inductors, or a pair of resistors.

Example 15 includes the method of any of examples 10 through 14, wherein adjusting the scale factor comprises adjusting the scale factor according to: SF_{NEW} = SF_{OLD} * (DOₜₒₙₑ/ROₜₒₙₑ); wherein SF represents the scale factor, RO represents the rate output and DO represents the drive output at the second frequency.

Example 16 includes a program product comprising a non-transitory computer-readable medium on which program instructions configured to be executed by at least one processor are embodied, wherein when executed by the at least one processor, the program instructions cause the at least one processor to perform a method comprising: driving a proof mass of a MEMS gyroscope at a first frequency; monitoring an amplitude of oscillation of the proof mass at the first frequency in a drive output from a first electrical channel of the MEMS gyroscope; monitoring an amplitude of a response to an input rate that represents a deflection of the proof mass at the first frequency in a rate output from a second electrical channel of the MEMS gyroscope; injecting a test tone at a second frequency, different from the first frequency and out of band for a bandwidth of the MEMS gyroscope, into the first electrical channel and the second electrical channel; and adjusting a scale factor for the MEMS gyroscope by a ratio of the drive output at the second frequency to the rate output at the second frequency.

Example 17 includes the program product of example 16, wherein monitoring the amplitude of oscillation of the proof mass includes monitoring the drive output generated by the first electrical channel including a charge amplifier and an analog-to-digital converter.

Example 18 includes the program product of any of examples 16 and 17, wherein monitoring the amplitude of the response to the input rate includes monitoring the rate output generated by the second electrical channel including a charge amplifier and an analog-to-digital converter.

Example 19 includes the program product of any of examples 16 through 18, wherein injecting the test tone comprises: generating the test tone with a signal generator; and injecting the test tone to the first electrical channel and to the second electrical channel through an interface circuit having a pair of capacitors, a pair of inductors, or a pair of resistors.

Example 20 includes the program product of any of examples 16 through 19, wherein adjusting the scale factor comprises adjusting the scale factor according to: SF_{NEW} = SF_{OLD} * (DOₜₒₙₑ/ROₜₒₙₑ); wherein SF represents the scale factor, RO represents the rate output and DO represents the drive output at the second frequency.

## Claims

1. A system, comprising:
a microelectromechanical system (MEMS) gyroscope (101) including an oscillating proof mass (104);
readout electronics (103), coupled to the MEMS gyroscope, the readout electronics including:
a first electrical channel (106) that is configured to monitor an amplitude of oscillation of the proof mass at a first frequency and to produce a drive output;
a second electrical channel (108) that is configured to monitor an amplitude of a response of the proof mass to an input rate that represents a deflection of the proof mass, and to produce a rate output; and
a processing system (102), including:
a signal generator (126) that is configured to generate a test tone at a second frequency, different from the first frequency and out of band from a bandwidth of the MEMS gyroscope, and to inject the test tone into the first electrical channel and the second electrical channel; and
a scale factor adjustment function (124) that is configured to adjust a scale factor (118) for the MEMS gyroscope by a ratio of the drive output at the second frequency to the rate output at the second frequency.

2. The system of claim 1, further including an interface circuit (128) that receives the test tone from the signal generator and provides the test tone to the first electrical channel and the second electrical channel.

3. The system of claim 2, wherein:
the first electrical channel includes a first charge amplifier (110-1) and a first analog-to-digital converter (112-1) coupled in series; and
the second electrical channel includes a second charge amplifier (110-2) and a second analog-to-digital converter (112-2);
wherein the signal generator injects the test tone into the interface circuit.

4. The system of claim 3, wherein the interface circuit includes a first capacitor (202-1) and a second capacitor (202-2), wherein the test tone is provided to the first capacitor and the second capacitor and wherein the first capacitor provides the test tone to the first electrical channel and the second capacitor provides the test tone to the second electrical channel.

5. The system of claim 4, wherein the first capacitor and the second capacitor comprise a matched pair.

6. The system of claim 1, wherein the scale factor adjustment function operates according to: ${SF}_{NEW} = {SF}_{OLD} * \left({DO}_{tone}/{RO}_{tone}\right)$ wherein SF represents the scale factor, RO represents the rate output and DO represents the drive output at the second frequency.

7. A method for calibrating a scale factor of a microelectromechanical system (MEMS) gyroscope, the method comprising:
driving a proof mass of the MEMS gyroscope at a first frequency (301);
monitoring an amplitude of oscillation of the proof mass at the first frequency in a drive output from a first electrical channel of the MEMS gyroscope (303);
monitoring an amplitude of a response to an input rate that represents a deflection of the proof mass at the first frequency in a rate output from a second electrical channel of the MEMS gyroscope (305);
injecting a test tone at a second frequency, different from the first frequency and out of band for a bandwidth of the MEMS gyroscope, into the first electrical channel and the second electrical channel (307); and
adjusting the scale factor for the MEMS gyroscope by a ratio of the drive output at the second frequency to the rate output at the second frequency (309).

8. The method of claim 7, wherein monitoring the amplitude of oscillation of the proof mass includes monitoring the drive output generated by the first electrical channel including a charge amplifier and an analog-to-digital converter; and
wherein monitoring the amplitude of the response to the input rate includes monitoring the rate output generated by the second electrical channel including a charge amplifier and an analog-to-digital converter.

9. The method of claim 7, wherein injecting the test tone comprises:
generating the test tone with a signal generator; and
injecting the test tone to the first electrical channel and to the second electrical channel through an interface circuit having a pair of capacitors, a pair of inductors, or a pair of resistors.

10. The method of claim 7, wherein adjusting the scale factor comprises adjusting the scale factor according to: ${SF}_{NEW} = {SF}_{OLD} * \left({DO}_{tone}/{RO}_{tone}\right)$ wherein SF represents the scale factor, RO represents the rate output and DO represents the drive output at the second frequency.
